# EUROPEAN PATENT APPLICATION

(11) **EP 3 257 471 A1**
(43) Date of publication of application: **20.12.2017**
(21) Application number: 15881693.4
(22) Date of filing: 16.06.2015
(51) Int. Cl.: A61C 17/34

(54) **ELECTRIC TOOTHBRUSH AND VERTICAL-BRUSHING-TYPE ELECTRIC TOOTHBRUSH**

(30) Priority: 15.02.2015 CN 201510083655; 02.06.2015 CN 201510295479
(71) Applicant: Shenzhen Jointronic Technology Co., Ltd, Shenzhen, Guangdong 518000 (CN)
(72) Inventor: WANG, Gang, Shenzhen, Guangdong 518000 (CN); LEI, Yan, Shenzhen Guangdong 518000 (CN)
(74) Representative: Studio Torta S.p.A.
(86) International application number: PCT/CN2015/081559
(87) International publication number: WO 2016/127532

(57) **Abstract**

An electric toothbrush (100), comprising a brush handle (10) and a brush head (20), the brush handle (20) comprises an electromotor (21), a transmission assembly (22) and a transmission rod (23), the transmission assembly (22) comprises a main body (221), a gear (222), a connecting arm (223) and a positioning member (224), the electromotor (21) has a rotor engaged with the gear (222), the gear (222) is arranged with a connecting rod (225), which has an end fixed at an eccentric position of the gear (222) and another end arranged on the main body (221), wherein the connecting arm (223) has an end arranged on the connecting rod (225) and another end arranged on the positioning member (224), and the transmission rod (23) has an end running through the positioning member (224) and the main body (221) and extending to the brush head (10).

## Description

### FIELD OF THE INVENTION

The present invention relates to the field of toothbrushes, more particularly to an electric toothbrush and a vertical-brushing-type electric toothbrush.

### BACKGROUND OF THE INVENTION

Existing toothbrushes on the market mainly include manual toothbrushes and electric toothbrushes. Herein, compared with manual toothbrushes, electric toothbrushes is capable of more thoroughly cleaning the teeth, removing plaque, reducing gingivitis and gingival bleeding, and thus are very popular.

So far, it is believed that brushing the teeth in vertical direction is more scientific. That is, placing the tips of the toothbrush bristles at the junction of the gum and the tooth crown, pressing and making massage lightly along the long axis of tooth, thereby effectively cleaning the gum and the chewing surface. However, existing vertical-brushing-type electric toothbrushes usually have poor effect owing to the configuration. Those electric toothbrushes usually have a problem that the vibrational moment is small such that, during the brushing, the bristles may stop vibrating when being pressed against the tooth under a slightly bigger force. On the other hand, those electric toothbrushes cannot satisfy the practical requirements due to the bristles which are vibrated to move in circular motions to go and come back rather than to move in a positive direction and a negative direction for 90 degrees.

### SUMMARY OF THE INVENTION

To this end, the present invention aims to provide an electric toothbrush and a vertical-brushing-type electric toothbrush, comprising bristles which are capable of being moved in a positive direction and a negative direction for 90 degrees and with a big vibrational moment.

The present invention provides an electric toothbrush comprising a brush head and a brush handle, wherein the brush head is mounted on the brush handle, and the brush handle comprises an electromotor, a transmission assembly and a transmission rod, wherein the transmission assembly comprises a main body, a gear, a connecting arm and a positioning member, wherein the electromotor has a rotor engaged with the gear, a connecting rod is disposed on the gear, and the connecting rod has an end fixed at an eccentric position of the gear and another end disposed on the main body, wherein the connecting arm has an end disposed on the connecting rod and another end disposed on the positioning member, wherein the transmission rod has an end running through the positioning member and the main body and extending into the brush head.

As a modification of the solution, the brush head comprises bristles and a housing, wherein the bristles are fixed on the housing, and a pushed part is arranged on the bristles and is positioned within the housing.

As a modification of the solution, the main body is provided with a first positioning hole and the positioning member is provided with a second positioning hole, one end of the transmission rod runs sequentially through the second positioning hole and the first positioning hole, and then extends into the housing of the brush head and gets close to the pushed part of the bristles.

As a modification of the solution, the connecting arm is provided with a first mounting hole, and the other end of the connecting rod runs through the first mounting hole and then is disposed on the main body.

As a modification of the solution, the connecting arm is provided with a second mounting hole, the positioning member is provided with a positioning shaft which has one end fixed on a body of the positioning member and the other end running through the second mounting hole and then suspended in mid air.

As a modification of the solution, the connecting arm is arc shaped.

As a modification of the solution, the transmission assembly further comprises a limiting member arranged on the side of the main body opposite to the positioning member, the limiting member is provided with a limiting hole, and the transmission rod runs through the second positioning hole and the first positioning hole and then extends through the limiting hole.

As a modification of the solution, the electric toothbrush further comprises a protector sleeve-arranged on the limiting member, the transmission rod runs through the second positioning hole, the first positioning hole and the limiting member and then runs through the protector, and the protector fits against the transmission rod and the limiting member.

As a modification of the solution, the electric toothbrush further comprises a battery electrically connected with the electromotor.

As a modification of the solution, the electric toothbrush further comprises a power interface electrically connected with the electromotor.

The present invention further provides a vertical-brushing-type electric toothbrush which comprises a transmission part and a brush head arranged on the transmission part, wherein the brush head comprises bristles, a fixing part and a pushed part, wherein the bristles are arranged on one side of the fixing part, the pushed part is arranged on the other side of the fixing part, and the pushed part is provided with an opening, wherein the transmission part comprises an electromotor, a transmission rod and a pushing rod, wherein the transmission rod has one end fixed to the electromotor and the other end fixed with the pushing rod, wherein the pushing rod has a free end positioned between two walls of the opening, such that when the electromotor works, the pushing rod is driven to rotate by the transmission rod, and the free end of the pushing rod collides with the two walls of the opening during the rotation, thereby driving the bristles to move in linear motions back and forth along the collision direction.

As a modification of the solution, the pushed part is hollow cylinder shaped, and the opening is formed on and extends through the peripheral wall of the pushed part.

As a modification of the solution, the transmission part further comprises a fixing member for the pushing rod, one end of the fixing member for the pushing rod is fixed with the transmission rod, and the pushing rod is fixed with the other end of the fixing member for the pushing rod.

As a modification of the solution, the fixing member for the pushing rod is cylinder shaped, the pushing rod is a flexible rod with a predetermined curvature, and the pushing rod is fixed at a circle center position of the fixing member for the pushing rod.

As a modification of the solution, the fixing member for the pushing rod is cylinder shaped, the pushing rod is a flexible rod, and the pushing rod is fixed at a position different from the circle center position of the fixing member for the pushing rod.

As a modification of the solution, the fixing member for the pushing rod is provided with a catching groove, the transmission part is provided with a catch member, and the catching groove gets stuck with the catch member, so as to enable the pushing rod to be positioned between two side walls of the opening of the pushed part.

As a modification of the solution, silica gel is provided at the joint of the transmission rod and the fixing member for the pushing rod, and a waterproof member is arranged at the joint of the transmission rod and the electromotor.

As a modification of the solution, the brush head further comprises a fixing rod arranged in the hollow region of the pushed part, the transmission part is further provided with an accommodating cavity, a fixing tube is arranged within the accommodating cavity, the pushed part is mounted in the accommodating cavity, and the fixing rod is sleeve-arranged in the fixing tube.

As a modification of the solution, the vertical-brushing-type electric toothbrush further comprises a rechargeable battery electrically connected with the electromotor.

As a modification of the solution, the vertical-brushing-type electric toothbrush further comprises a positioning support, inside of which the electromotor is fixed.

Due to the improved vibration structure formed by the gear, the connecting arm and the positioning member, the transmission rod in the electric toothbrush according to the present invention is driven to push the pushed part of the bristles quickly, so as to enable the bristles to vibrate quickly, thereby enabling effective cleaning of the teeth and facilitating better teeth-brushing effect.

Due to the transmission part consisted of the electromotor, the transmission rod and the pushing rod, an efficient mechanical transmission is provided in the vertical-brushing-type electric toothbrush according to the present invention, in which the pushed part of the brush head may be pushed by and collided with the pushing rod at a high frequency, such that the bristles may vibrate at a high frequency in linear direction with comparatively big vibrational moment and vibrational frequency. In this way, the teeth may be effectively cleaned without damaging the gums or resulting in problems such as gingival bleeding or bacterial infection or oral inflammation, thereby achieving the prevention of oral disease and meanwhile achieving the health care, and thus satisfy the practical requirements.

### BRIEF DESCRIPTION OF THE DRAWINGS

In order to illustrate the technical solutions of the present invention clearly, figures which are relevant with the embodiments are briefly explained in the following description. It is noticeable that the figures merely illustrate some embodiments of the present invention, and other figures can be derived from these figures without inventive steps by those skilled in the art.
Fig.1 is a structure schematic drawing of an electric toothbrush according to a first embodiment of the present invention.
Fig.2 is an enlarged view of the part I shown in Fig. 1.
Fig.3 is a structure schematic drawing of a transmission assembly and a transmission rod according to the first embodiment of the present invention.
Fig.4 is a structure schematic drawing of a vertical-brushing-type electric toothbrush according to a second embodiment of the present invention.
Fig.5 is a schematic drawing of a brush head and a transmission part according to the second embodiment of the present invention.
Fig.6 is a structure schematic drawing illustrating the brush head to be mounted in a holding cavity according to the second embodiment of the present invention.
Fig.7 is a partial schematic drawing of the transmission part according to the second embodiment of the present invention.

### DETAILED DESCRIPTION OF ILLUSTRATED EMBODIMENTS

The technical solutions according to the embodiments of the present invention will be clearly and fully explained below in conjunction with figures. It is noticeable that the described embodiments are merely some embodiments of the present invention, but are not to limit the invention in any form. The present invention is intended to cover all embodiments those skilled in the art may obtain on the basis of the embodiments of the present invention without involving an inventive step.

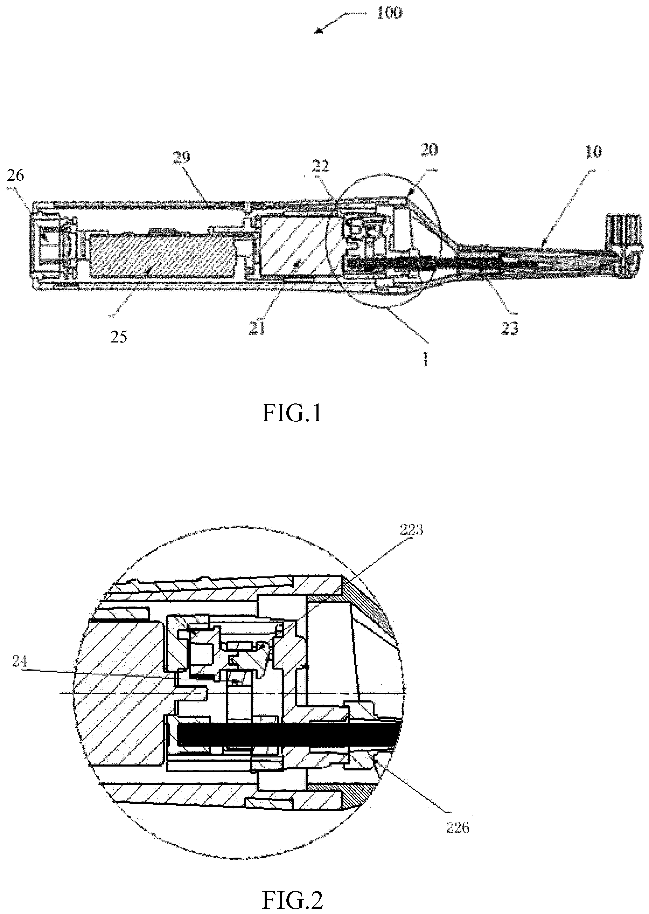

Referring to Fig.1, a first embodiment of the present invention provides an electric toothbrush 100 comprising a brush head 10 and a brush handle 20, wherein the brush head 10 is fixed on the brush handle 20, the brush head 10 is capable of being pushed back and forth by the brush handle 20 so as to vibrate back and forth in a predefined direction at high frequency.

In an embodiment of the present invention, the brush head 10 comprises bristles 11 and a housing 12, wherein the bristles 11 are arranged on the housing 12, and the housing 12 may be sleeve-arranged on the brush handle 20 so as to fix the brush head 10 on the brush handle 20. Herein, a pushed part is arranged on the bristles 11, and the pushed part is capable of being pushed by the brush handle 20 so as to enable the bristles 11 to vibrate back and forth.

In an embodiment of the present invention, the brush handle 20 comprises an electromotor 21, a transmission assembly 22 and a transmission rod 23, wherein the electromotor 21 is mechanically connected with the transmission assembly 22. The transmission rod 23 has one end fixed to the transmission assembly 22 and the other end arranged inside the housing 12 of the brush head 10 and adjacent to the pushed part of the bristles 12. The transmission rod 23 may be driven by the electromotor 21 via the transmission assembly 22, to vibrate back and forth, such that the pushed part of the bristles 11 may be pushed by the transmission rod 23 so as to enable the bristles 11 to vibrate back and forth.

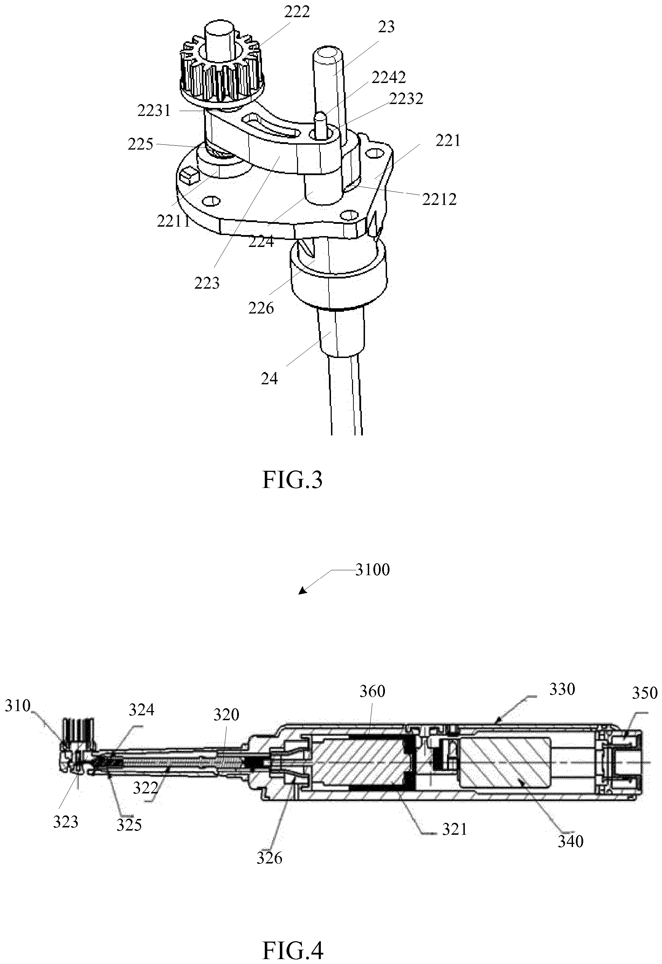

In particular, referring to Figs.2 and 3 together, the transmission assembly 22 in an embodiment of the present invention comprises a main body 221, a gear 222, a connecting arm 223, and a positioning member 224. Herein, the gear 222 has a cylinder shape with a saw tooth structure being arranged on its peripheral wall, and a connecting rod 225 is provided at a bottom of the gear 222. Herein, the connecting rod 225 has one end fixed to the gear 222 at an eccentric position (i.e. the center of the connecting rod 225 does not coincide with the center of the gear 222), and the other end disposed on the main body 221. The other end of the connecting rod 225 is capable of moving on the main body 221, for example moving in circular motions on the surface of the main body 221.

It should be noted that, in an embodiment of the present invention, a round plate 2211 may be arranged on the main body 221. An end of the connecting rod 225 may be connected to the round plate 2211 and move in circular motions on the round plate 2211.

It should be noted that, in an embodiment of the present invention, the main body 221 may be provided with a mounting hole (not shown in the figures). The round plate 2211 is arranged on one side of the mounting hole, and a retaining cap (not shown in the figures) is arranged on the other side of the mounting hole. The retaining cap is connected with the round plate 2211 so as to fix the round plate 2211 on the main body 221.

In an embodiment of the present invention, the main body 221 is provided with a first positioning hole 2212, and the positioning member 224 is provided with a second positioning hole (not shown in the figures). The first positioning hole 2212 is aligned with the second positioning hole. The transmission rod 23 runs sequentially through the second positioning hole and the first positioning hole 2212 so that the main body 221, the positioning member 224 and the transmission rod 23 are connected. Herein, the transmission rod 23 is sized to be substantially equal to the bore diameter of the second positioning hole, such that the transmission rod 23 is tightly fixed in the second positioning hole and is prevented from moving relative to the second positioning hole. The bore diameter of the first positioning hole 2212 is a little bigger than the size of the transmission rod 23, such that the transmission rod 23 is allowed to vibrate in the first positioning hole 2212.

In an embodiment of the present invention, a first mounting hole 2231 and a second mounting hole 2232 are respectively provided at the two ends of the connecting arm 223, and a positioning shaft 2242 is arranged on the side of the positioning member 224 facing away from the main body 221. The connecting rod 225 disposed on the gear 222 runs through the first mounting hole 2231 and the positioning shaft 2242 runs through the second mounting hole 2232, such that the gear 222 and the positioning member 224 are connected by the connecting arm 223.

It should be noted that, in an embodiment of the present invention, the connecting arm 223 may be a curved arm, such that the force applied on the connecting arm 223 during the vibration of the connecting arm 223 is reduced. It should be noted that, in an embodiment of the present invention, the main body 221 is further arranged with a limiting member 226. The limiting member 226 is a hollow cylinder fixed on the side of the main body 221 opposite to the positioning member 124, and is provided with a limiting hole. The transmission rod 23 not only runs through the second positioning hole and the first positioning hole 2212, but then also runs through the limiting member 226. Due to the limiting member 226, the transmission rod 23 is limited within the limiting hole and is prevented from vibrating with excessively large vibrational amplitude or in a deviating direction.

In an embodiment of the present invention, the electromotor 21 may be a motor, and the electromotor 21 may be provided with a rotor, wherein the rotor may be engaged with the saw tooth structure provided on the surface of the gear 222, such that, when the electromotor 21 is actuated, the rotor rotates at a high speed and drives the gear 222 to rotate.

It should be noted that, in an embodiment of the present invention, the brush handle 20 further comprises a protector 24. The protector 24 may be a thermal insulation and waterproofing sleeve which is sleeve-arranged on the limiting member 226. The transmission rod 23 not only runs through the limiting member 226, but then also may run through the protector 24. Since the protector 24 is elastic, it is held against the surface of the transmission rod 23 and the surface of the limiting member 226. In this way, the entry of water through the brush head 10 during brushing leaking into the electromotor 21 via the transmission rod 23 is prevented, and thus the damage of the electromotor 21 caused by leakage water is prevented.

In an embodiment of the present invention, the brush handle 20 further comprises a battery 25. The battery 25 may be a rechargeable battery, such as lithium battery. The battery 25 is electrically connected with the electromotor 21 and may supply electric energy required for the operation of the electromotor 21.

In an embodiment of the present invention, the brush handle 20 further comprises a charging port 26 electrically connected with the battery 25. The battery 25 may be charged via the charging port 26 in the case that electric energy supplied by external power supply is received, so as to ensure the battery 25 is reusable and improve battery life of the electric toothbrush 100.

It should be noted that, in an embodiment of the present invention, the brush handle 20 further comprises a circuit board 4 electrically connected with the electromotor 21, with the charging port 26 and with the battery 25. The circuit board may be used for controlling the start and stop of the electromotor 21, and for managing the electric energy received by the charging port 26 and transferring the electric energy to the battery 25 so as to charge the battery 25.

It should be noted that, in an embodiment of the present invention, the brush handle 20 further comprises a fixing housing 29 for accommodating a plurality of components such as the electromotor 21, the transmission assembly 22, the transmission rod 23, the battery 25 and the charging port 26 inside, such that the brush handle 20 forms an integrated part. Furthermore, due to the fixing housing 29, these components accommodated inside are prevented from being damaged by external force or contaminated by contaminants such as moisture and dust.

Referring to Figs. 1-3 together, during using, the electromotor 21 starts to work once the switch button is activated, and the rotor of the electromotor 21 rotates at a high speed. Since the gear 222 is engaged with the rotor, the gear 222 rotates synchronously. In this case, since the connecting rod 225 is fixed to the gear 222 at an eccentric position, the other end of the connecting rod 225 disposed on the main body 221 moves in circular motions and the circle radius depends on the eccentric position of the connecting rod 225 relative to the gear 222. Since the connecting arm 223 is connected with the connecting rod 225, the connecting arm 223 vibrates back and forth as the connecting rod 225 moves in circular motions. The connecting arm 223 substantially vibrates in a direction along which the arm of the connecting arm 223 extends. In this case, the transmission rod 23 is driven by the positioning member 224 to vibrate integrally and accordingly. The vibrational movement is transmitted to the end inside the housing 11 by the transmission rod 23. The pushed part of the bristles 12 is pushed due to the back and forth vibration, such that the bristles 12 also vibrate back and forth during brushing in a direction that coincides with the tooth growth direction. Due to the vibration structure of the transmission assembly 22 according to the embodiment of the present invention, an improved effect is facilitated and better cleaning effect is achieved. For example, in the case that the electromotor runs at 5400 revolutions under a load, a frequency of 7300 or more per minute may be achieved. That is to say, the bristles 12 have a higher vibrational frequency.

In summary, in the electric toothbrush 100 according to the embodiment of the present invention, due to the improved vibration structure formed by the gear 222, the connecting arm 223 and the positioning member 224, the transmission rod 23 is driven to push the pushed part of the bristles 11 quickly so as to enable the bristles 11 to vibrate quickly, thereby effectively cleaning the teeth and achieving better teeth-brushing effect.

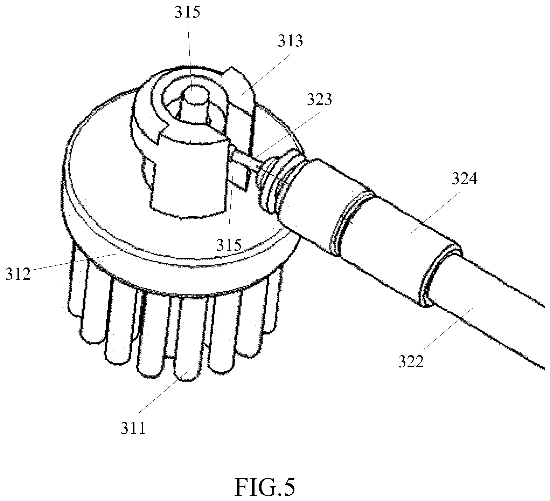

Referring to Figs.4 and 5 together, a vertical-brushing-type electric toothbrush 3100 according to a second embodiment of the present invention comprises a brush head 310 and a transmission part 320, wherein the brush head 310 comprises bristles 311, a fixing part 312, and a pushed part 313, wherein the bristles 311 are arranged on one side of the fixing part 312, the pushed part 313 is arranged on the other side of the fixing part 312, and the pushed part 312 is provided with an opening 314. The transmission part 320 comprises an electromotor 321, a transmission rod 322, and a pushing rod 323. The transmission rod 322 has one end fixed to the electromotor 321 and another end fixed with the pushing rod 323. The pushing rod 323 has a free end positioned just between two walls of the opening 314. When the electromotor 321 works, the pushing rod 323 is driven to rotate by the transmission rod 322, and the free end of the pushing rod 323 collides with the two walls of the opening 314 back and forth during the rotation, thereby driving the bristles 311 to move in linear motions back and forth along the collision direction.

In an embodiment of the present invention, the bristles 311 may be arranged on the fixing part 312 in a predetermined manner. For example, the bristles 311 may be arranged to form a rectangle or a circle and the fixing part 312 may be accordingly formed in a rectangle or a circle, which is not limited in the present invention.

In an embodiment of the present invention, the pushed part 313 substantially is a hollow cylinder. The opening 314 is formed on and extends through the peripheral wall of the pushed part 313, such that the opening 313 has two opposite sides each having a side wall. Furthermore, the free end of the pushing rod 323 which extends into the brush head 310 is positioned just between the two side walls of the opening 314. It should be understood that, in an embodiment of the present invention, the size of the opening 313 can be determined as required. Herein, in the case that the opening 313 is comparatively small, the free end of the pushing rod 323 collides with the two walls of the pushing rod 323 more frequently, thus the vibrational moment and the vibrational frequency of the bristles 311 are increased. It should be understood that, in other embodiments of the present invention, the opening 314 may be formed without extending through the peripheral wall. For example, the opening 314 may be formed only in an upper part or a lower part of the pushed part 313, or formed in the middle of the peripheral wall. All of these fall within the scope of the present invention and are not repeated herein.

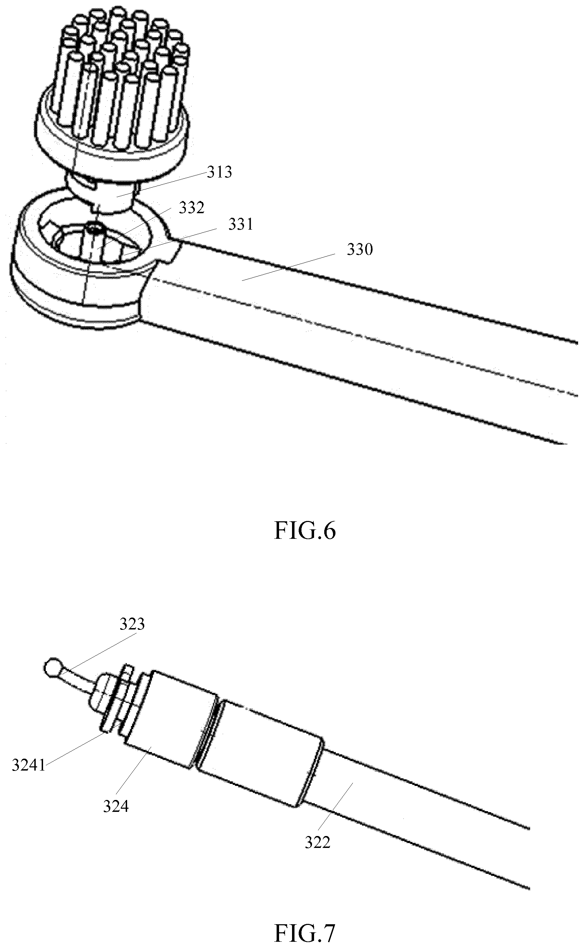

Referring to Fig.6, in an embodiment of the present invention, the vertical-brushing-type electric toothbrush 3100 further comprises a fixing housing 330 for providing protective housing and supporting structure for the transmission part 320. Herein, the fixing housing 330 is further provided with an accommodating cavity 331 for accommodating the pushed part 313 of the brush head 310. In particular, a fixing rod 315 is further arranged in the hollow region of the pushed part 313, and a fixing tube 332 is further arranged in the accommodating cavity 331. The fixing rod 315 of the brush head 310 may be inserted in the fixing tube 332 so as to mount the brush head 10 on the fixing housing 330. Herein, the radius of the fixing tube 332 should be slightly bigger than that of the fixing rod 315, so as to ensure a free rotation of the entire brush head 310.

In an embodiment of the present invention, two ends of the transmission rod 322 are mechanically connected with the electromotor 321 and the pushing rod 323 respectively by a drive sleeve or an according transmission mechanism, such that the pushing rod 323 may be driven to rotate by the electromotor 321 via the transmission rod 322. For example, the electromotor 321 may be provided with a rotation shaft, and the device is arranged at one end of the transmission rod 322, such that the electromotor 321 is drive-connected with the transmission rod 322. Similarly, the pushing rod 323 may be sleeve-connected with or embedded on the transmission rod 322 at the other end of the transmission rod 322.

It should be noted that, in an embodiment of the present invention, the transmission part 320 further comprises a fixing member 324 for the pushing rod. The fixing member 324 for the pushing rod may be cylinder shaped. Herein, one end of the fixing member 324 for the pushing rod is fixed with the transmission rod 322, and the pushing rod 323 is fixed with the other end of the fixing member 324 for the pushing rod, such that the pushing rod 23 is fixed with the transmission rod 322 via the fixing member 324 for the pushing rod. Referring to Fig.7, in an embodiment of the present invention, the pushing rod 323 may extend into the accommodating cavity 331. In this case, in order to control the length of the part of the pushing rod 323 extending into the accommodating cavity 331, the fixing member 324 for the pushing rod may be provided with a catching groove 3241, and a catch member (not shown in the figures) may be arranged at the joint of the accommodating cavity 331 and the fixing member 324 for the pushing rod, such that when the pushing rod 323 and the fixing member 324 for the pushing rod extending in the accommodating cavity 331 reach a predetermined position, the catching groove 3241 gets stuck with the catch member, thereby preventing the fixing member 324 for the pushing rod from further extending inwards. Herein, the predetermined position is determined in such a manner that the free end of the pushing rod 323 is positioned just between two side walls of the opening 314, such that the free end of the pushing rod 323 may collide with the two walls of the opening 314 during the rotation.

In an embodiment of the present invention, the pushing rod 323 may be a flexible rod with a predetermined curvature. For example, the pushing rod 323 may be made from a material such as rubber or plastic. The pushing rod 323 may be fixed to the fixing member 324 for the pushing rod at a circle center position (or a position different from the circle center position) of the fixing member 324 by injection molding. The other end (i.e. the free end) is positioned between the two walls of the opening 314. Herein, during the injection molding, the pushing rod 323 should be formed with a predetermined curvature. When the electromotor 321 rotates, the pushing rod 323 is driven to rotate in a 360-degree manner by the transmission rod 322. Since the pushing rod 323 is formed with a curvature, the motion trajectory of the free end of the pushing rod 323 during the rotation is a circle, and the radius of the circle depends on the curvature. The free end of the pushing rod 323 contacts and collides with the two walls of the opening 314. During the collision, the pushing rod 323 is deformed and makes the entire brush head 310 move along the collision direction. Herein, the moving distance depends on both the curvature of the pushing rod 323 and the size of the opening 314. Since the pushing rod 323 rotates in a 360-degree manner, the free end of the pushing rod 23 collides with the two walls of the opening 314 alternately during the whole rotation process of the pushing rod 23, and thus the brush head 310 moves in linear motions back and forth along the collision direction. Herein, the collision direction (or the moving direction) coincides with the brushing direction along which the teeth are brushed in a vertical brushing manner.

In other embodiments of the present invention, the pushing rod 323 may also be a flexible rod. For example, the pushing rod 323 may be made from a material such as rubber or plastic. The pushing rod 323 may be fixed to the fixing member 324 for the pushing rod at a position of the fixing member 324 different from the circle center position (a similar structure as eccentric wheel) by injection molding. The other end (i.e. the free end) is positioned between the two walls of the opening 314. When the electromotor 321 rotates, the pushing rod 323 is driven to rotate in a 360-degree manner by the transmission rod 322. Since the pushing rod 323 is fixed to the fixing member 324 for the pushing rod at a position of the fixing member 324 different from the circle center position, the rotation trajectory of the free end of the pushing rod 323 is a circle, and the radius of the circle depends on the distance between the pushing rod 323 and the circle center of the fixing member 324 for the pushing rod. During the rotation, the free end of the pushing rod 323 contacts and collides with the two side walls of the opening 314. During the collision, the pushing rod 323 makes the entire brush head 310 move along the collision direction. Since the pushing rod 323 rotates in a 360-degree manner, the free end of the pushing rod 323 collides with the two side walls of the opening 314 alternately during the rotation of the pushing rod 323, and thus the brush head 310 moves in linear motions back and forth along the collision direction. Herein, the collision direction (or the moving direction) coincides with the brushing direction along which the teeth are brushed in a vertical brushing manner.

It should be noted that, in an embodiment of the present invention, silica gel 325 may be provided at the joint of the transmission rod 322 and the fixing member 324 for the pushing rod. The silica gel 325 may be used for heat conduction and transferring out the heat quickly, thereby preventing the temperature of the joint of the transmission rod 322 and the fixing member 324 for the pushing rod from being excessive during the high speed rotation.

It should be noted that, in an embodiment of the present invention, a waterproof member 326 may be arranged at the joint of the transmission rod 322 and the electromotor 321. The waterproof member 326 may be water sealed. Due to the waterproof member 326, the water for brushing is prevented from leaking into the electromotor 321, and thus the damage of the electromotor 321 is prevented. It should be noted that, in an embodiment of the present invention, the vertical-brushing-type electric toothbrush 3100 further comprises a rechargeable battery 340 arranged within the fixing housing 330. Furthermore, the rechargeable battery 340 may be electrically connected with the electromotor 321 and may supply electric energy required for the operation of the electromotor 321.

It should be noted that, in an embodiment of the present invention, the vertical-brushing-type electric toothbrush 3100 further comprises a power interface 350 arranged within the fixing housing 330 and electrically connected with the rechargeable battery 340, so as to facilitate charging of the rechargeable battery 340 by external power supply.

It should be noted that, in an embodiment of the present invention, the vertical-brushing-type electric toothbrush 3100 further comprises a positioning support 360, inside of which the electromotor 321 is fixed.

In summary, in the vertical-brushing-type electric toothbrush 3100 according to the embodiment of the present invention, due to the transmission part 320 consisted of the electromotor 321, the transmission rod 322 and the pushing rod 323, an efficient mechanical transmission is provided, in which the pushed part 313 of the brush head 310 may be pushed by and collided with the pushing rod 323 at a high frequency, such that the bristles 311 may vibrate at a high frequency in linear direction with comparatively big vibrational moment and vibrational frequency. In this way, the teeth may be effectively cleaned without damaging the gums or resulting in gingival bleeding or bacterial infection or oral inflammation, thereby achieving the prevention of oral disease and meanwhile achieving the health care, and thus satisfy the practical requirements.

The particular embodiments disclosed above are merely some preferred embodiments of the present invention, but are not to limit the invention in any form. Those skilled in the art may understand and carry out all or a part of the above embodiments, and obtain equivalent modification without departing from the scope of the present invention.

## Claims

1. An electric toothbrush, **characterized in that**: it comprises a brush head and a brush handle, wherein the brush head is mounted on the brush handle, the brush handle comprises an electromotor, a transmission assembly and a transmission rod, wherein the transmission assembly comprises a main body, a gear, a connecting arm and a positioning member; wherein the electromotor has a rotor engaged with the gear, a connecting rod is disposed on the gear, and the connecting rod has an end fixed at an eccentric position of the gear and the other end disposed on the main body; wherein the connecting arm has an end disposed on the connecting rod and the other end disposed on the positioning member, and the transmission rod has an end running through the positioning member and the main body and extending to the brush head.

2. The electric toothbrush according to claim 1, **characterized in that**: the brush head comprises bristles and a housing, wherein the bristles are fixed on the housing, the bristles are provided with a pushed part, and the pushed part is positioned within the housing.

3. The electric toothbrush according to claim 2, **characterized in that**: the main body is provided with a first positioning hole, the positioning member is provided with a second positioning hole, one end of the transmission rod runs sequentially through the second positioning hole and the first positioning hole and then extends into the housing of the brush head and gets close to the pushed part of the bristles.

4. The electric toothbrush according to claim 3, **characterized in that**: the connecting arm is provided with a first mounting hole, and the other end of the connecting rod runs through the first mounting hole and then is disposed on the main body.

5. The electric toothbrush according to claim 4, **characterized in that**: the connecting arm is provided with a second mounting hole, the positioning member is provided with a positioning shaft which has one end fixed on a body of the positioning member and the other end running through the second mounting hole and then suspended in mid air.

6. The electric toothbrush according to claim 1, **characterized in that**: the connecting arm is arc shaped.

7. The electric toothbrush according to claim 1, **characterized in that**: the transmission assembly further comprises a limiting member arranged on a side of the main body opposite to the positioning member, the limiting member is provided with a limiting hole, and the transmission rod runs through the second positioning hole and the first positioning hole and then runs through the limiting hole.

8. The electric toothbrush according to claim 7, **characterized in that**: the electric toothbrush further comprises a protector sleeve-arranged on the limiting member, the transmission rod runs through the second positioning hole, the first positioning hole and the limiting member and then runs through the protector, and the protector fits against the transmission rod and the limiting member.

9. The electric toothbrush according to claim 1, **characterized in that**: the electric toothbrush further comprises a power interface electrically connected with the electromotor.

10. A vertical-brushing-type electric toothbrush, **characterized in that**: it comprises a brush head and a transmission part, wherein the brush head comprises bristles, a fixing part and a pushed part, the bristles are arranged on one side of the fixing part, the pushed part is arranged on the other side of the fixing part, and the pushed part is provided with an opening; wherein the transmission part comprises an electromotor, a transmission rod and a pushing rod, wherein the transmission rod has one end fixed to the electromotor and the other end fixed with the pushing rod, wherein a free end of the pushing rod is positioned between two walls of the opening, the pushing rod is driven to rotate by the electromotor via the transmission rod, and the free end of the pushing rod collides with the two walls of the opening alternately during the rotation, thereby driving the bristles to move in linear motions back and forth along the collision direction.

11. The vertical-brushing-type electric toothbrush according to claim 10, **characterized in that**: the electromotor is provided with a rotation shaft which is embedded at an end of the transmission rod.

12. The vertical-brushing-type electric toothbrush according to claim 10, **characterized in that**: the pushed part is hollow cylinder shaped, and the opening is formed on and extends through a peripheral wall of the pushed part.

13. The vertical-brushing-type electric toothbrush according to claim 10, **characterized in that**: the transmission part further comprises a fixing member for the pushing rod, one end of the fixing member for the pushing rod is fixed with the transmission rod, and the pushing rod is fixed with the other end of the fixing member for the pushing rod.

14. The vertical-brushing-type electric toothbrush according to claim 13, **characterized in that**: the fixing member for the pushing rod is cylinder shaped, the pushing rod is a flexible rod with a predetermined curvature, and the pushing rod is fixed at a circle center position of the fixing member for the pushing rod.

15. The vertical-brushing-type electric toothbrush according to claim 13, **characterized in that**: the fixing member for the pushing rod is cylinder shaped, the pushing rod is a flexible rod and is fixed at a position different from a circle center position of the fixing member for the pushing rod.

16. The vertical-brushing-type electric toothbrush according to claim 12, **characterized in that**: the vertical-brushing-type electric toothbrush further comprises a fixing housing, the transmission part is arranged inside the fixing housing; the fixing housing is further provided with an accommodating cavity, and the pushed part of the brush head is accommodated in the accommodating cavity.

17. The vertical-brushing-type electric toothbrush according to claim 16, **characterized in that**: the brush head further comprises a fixing rod arranged in a hollow region of the pushed part, a fixing tube is arranged within the accommodating cavity, the pushed part is mounted in the accommodating cavity, and the fixing rod is sleeve-arranged in the fixing tube.

18. The vertical-brushing-type electric toothbrush according to claim 16, **characterized in that**: the fixing member for the pushing rod is provided with a catching groove, a catch member is arranged in the accommodating cavity, and the catching groove gets stuck with the catch member.

19. The vertical-brushing-type electric toothbrush according to claim 14, **characterized in that**: silica gel is provided at a joint of the transmission rod and the fixing member for the pushing rod, and a waterproof member is arranged at a joint of the transmission rod and the electromotor.
